# EUROPEAN PATENT SPECIFICATION

(11) **EP 1 833 310 B1**
(45) Date of publication and mention of the grant of the patent: **27.01.2010**
(21) Application number: 04804259.2
(22) Date of filing: 23.12.2004
(51) Int. Cl.: A23L 1/162

(54) **PROCESS FOR THE MANUFACTURE OF NON-FRIED INSTANT COOKING DRY NOODLES**
VERFAHREN ZUR HERSTELLUNG VON NICHT FRITTIERTEN TROCKENEN SCHNELLKOCHNUDELN
PROCEDE DE PRODUCTION DE NOUILLES SECHEES NON FRITES A CUISSON INSTANTANEE

(43) Date of publication of application: 19.09.2007
(73) Proprietor: Nestec S.A., 1800 Vevey (CH)
(72) Inventor: Toh, Tian-Seng, 640941 Singapore (SG)
(74) Representative: Thomas, Alain
(86) International application number: PCT/EP2004/014665
(87) International publication number: WO 2006/066609

(56) References cited:
- EP-A- 0 968 659
- GB-A- 2 043 424
- US-A- 4 098 906
- US-A- 4 590 083
- US-A- 4 783 339
- US-A- 5 500 236
- US-A- 5 840 359

## Description

The present invention concerns a process for the manufacture of non-fried instant cooking or soaking dry noodles.

It is already known to prepare non-fried dry instant cooking noodles. The US patent No. 4'098'906 concerns a process of preparing non-fried dry, instant noodles which comprises coating the surface of raw noodles with an aqueous emulsion of an edible oil, heating said coated noodles with steam and drying said steamed noodles. The problem with the noodles obtained according to this process is that the taste obtained for the consumer after cooking or soaking in hot water is not really like fried noodles.

US4590083 discloses rapid-cooking noodles that are prepared used Kansui and a carbonate. US5500236 discloses a method of obtaining instant-cooking noodles.

Therefore, the objective of the process invention is to develop a process, wherein the obtained non-fried noodles have really for the consumer a fried taste, although prepared without any frying.

The present invention concerns a process for the manufacture of non-fried instant cooking or soaking dry noodles, comprising the steps of :
a) preparing a mixture of oil, wheat flour, water and a concentrate comprising sodium chloride, sodium carbonate, potassium carbonate and sodium polyphosphate,
b) reacting said mixture above atmospheric pressure,
c) preparing a dough mixture comprising wheat flour, water, kansui solution and a part of the preceding reaction mixture,
d) processing said dough mixture by kneading, rolling into sheets, cutting into strips and steaming and
e) drying the dough mixture with air.

The specificity of the present invention is to make a pre-reaction in a wok or any other reactor. During this flavour reaction stage, at least 60 time more concentrated of ingredients in a solution were fried with flour in oil. The concentrate contains common ingredients used in noodle manufacturing, like mentioned above. The ratio in weight oil/wheat flour/concentrate is comprised between 1/1/1 and 3/2/10. Most preferably this ratio is 3/2/4.

The oil used for this pre-reaction step can be any edible oil. Most preferably this oil is palm oil or palm olein, alone or in combination.

The conditions of the pre-reaction are not critical. But, preferably the reaction is carried out at a pressure above atmospheric pressure. According to a preferred embodiment, the pressure is comprised between 2 and 6 bar. The duration of the reaction is normally comprised between 10 and 90 minutes. The higher the pressure in the system, the shorter the time reaction. The temperature for the pre-reaction is higher than 100°C. This temperature is comprised between 110 and 150 °C. Preferably, this temperature is comprised between 125 and 140°C.

After this pre-reaction, a small part of this concentrated flavouring agent is added in the conventional dough mixture comprising wheat flour, water, kansui solution and other additives. The amount of the concentrated flavouring agent used is normally comprised between 0.5 and 5 % (flour basis). The amount used is preferably around 1 %. All the percentages given in the present description are in weight. The kansui solution is an aqueous solution containing 1 % by weight of sodium chloride, sodium carbonate, potassium carbonate and sodium polyphoshate. The amount of kansui solution in the dough mixture is comprised between 10 and 25 parts.

The wheat flour used according to the invention is not critical. Preferably, the wheat flour used is normal soft wheat flour.

Other additives can be added to the dough mixtures. These additives are tapioca and potato starch, a small amount of oil and other common additives taken from the group consisting of potassium carbonate, sodium chloride, sodium polyphosphate, sodium carbonate and edible gums.

The amount of,oil is comprised between 0 and 5 % of the final composition. The amount of tapioca and potato starch is comprised between 0 and 20 %. These ingredients can be used alone or in combination.

The step of drying can be carried out in a hot air oven or by impingement drying. The temperature of drying depends on the type of drying used. In the case of an oven drying, this temperature can be lower, like 70 °C or higher. In the case of impingement drying, this temperature used can reached 200°C and below.

Concerning also the velocity of the air used for drying, it is also depending on the type of drying. In the oven drying, a lower velocity can be used , for example 2-10 m/s. On the contrary , in the case of impingement drying a higher velocity can be used, like between 20 and 60 m/s.

Concerning the duration of drying, it is also depending on the way of drying. In the case of oven drying, it takes between 30 and 60 minutes. In the case of impingement drying, it is quicker and take between 1 and 5 minutes.

The final moisture content of the noodles is below 12 %. In a preferred embodiment, the moisture content is below 5 %.

The present invention concerns further the product obtained according to the invention, that is a non-fried instant cooking dry noodles containing oil in an amount comprised between 0 and 3 %, said oil being in the dough, having a moisture content below 5 % and comprising further wheat flour, potato and tapioca starch and a small amount of a flavour, which is a reaction product between oil, wheat flour and a concentrate kansui comprising sodium chloride, sodium carbonate, potassium carbonate and sodium polyphosphate.

The consumer has then ready to use non-fried noodles. He can either prepared by cooking or by soaking in hot water. The soaking is carried out at a temperature comprised between 70 and 100°C. Preferably, the soaking temperature is comprised between 90 and 100 °C. The taste is really near a fried noodle product.

The following examples further illustrate the present invention.

### Example 1

20 parts of dry wheat flour, 30 parts of palm oil, 32parts of water and 12 parts of concentrate kansui are mixed together and reacted at a pressure of 3 bar during 1 hour.

3% of the pre-reacted flavour (flour basis) was added to the dough during dough mixing. The dough is then processed through normal noodle processing. The noodles after steaming are dried in impingement dryer at 150°C for 5 minutes.

This noodles has a good fried taste compared to noodles without addition of pre-reacted flavour and dried with conventional dryer.

### Example 2

20 parts of dry wheat flour, 25 parts of palm oil, 25 parts of water and 15 parts of concentrated kansui are mixed together and reacted at a pressure of 6 bar for 30 minutes.

2% of the pre-reacted flavour (flour basis), 2% oil and 5% starch are added into the dough during dough mixing. Subsequently, the dough is processed as the normal noodle processing procedure. The steamed noodles are dried in impingement dryer at 180°C for 2 minutes.

This noodles has good fried taste and appearance and texture as fried noodles.

## Claims

1. Process for the manufacture of non-fried instant cooking dry noodles, comprising the steps of :
a) preparing a mixture of oil, wheat flour, water and a concentrate comprising sodium chloride, sodium carbonate, potassium carbonate and sodium polyphosphate,
b) reacting said mixture above atmospheric pressure,
c) preparing a dough mixture comprising wheat flour, water, kansui solution and a part of the preceding reaction mixture,
d) processing said dough mixture by kneading, rolling into sheets, cutting into strips and steaming and
e) drying the dough mixture with air.

2. Process according to claim 1, wherein the oil used is any edible oil, like palm oil or palm olein.

3. Process according to any of claims 1 or 2, wherein the mixture is reacted at a pressure comprised between 2 and 6 bar.

4. Process according to any of claims 1 to 3, wherein the mixture is reacted during 10 to 90 minutes.

5. Process according to any of claims 1 to 4, wherein between 0.5 and 5 % of the reaction mixture is added to the dough mixture.

6. Process according to any of claims 1 to 5, wherein the other additives are added to the dough mixture, said additives are tapioca and potato starch, a small amount of oil and other common additives taken from the group consisting of potassium carbonate, sodium chloride, sodium polyphosphate, sodium carbonate and edible gums.

7. Process according to claim 6, wherein the amount of oil is comprised between 0 and 5 %.

8. Process according to claim 6, wherein the amount of tapioca and potato starch is comprised between 0 and 20 %.

9. Process according to any of claims 1 to 8, wherein the drying is carried out in a hot air oven or by impingement drying.

10. Process according to claim 9, wherein the drying is carried out at a temperature comprised between 70 and 200 °C.

11. Process according to claim 9, wherein the drying is carried out with an air velocity comprised between 2 and 60 m/s.

12. Process according to any of claims 9 to 11, wherein the drying is carried out by impingement drying during 1 to 5 minutes.

13. Process according to any of claims 9 to 11, wherein the drying is carried out in a hot air oven during 30 to 60 minutes.

14. Process according to any of claims 9 to 13, wherein the final noodles have a moisture content below 12 %.

15. Non-fried instant cooking dry noodles containing oil in an amount comprised between 0 and 3 %, said oil being in the dough, having a moisture content below 5 % and comprising further wheat flour, potato and tapioca starch and a small amount of a flavour, which is a reaction product between oil, wheat flour and a concentrate comprising sodium chloride, sodium carbonate, potassium carbonate and sodium polyphosphate.

## Patentansprüche

1. Verfahren zur Herstellung von nicht frittierten schnell kochenden Trockennudeln, umfassend die Schritte:
a) Zubereiten einer Mischung aus Öl, Weizenmehl, Wasser und einem Konzentrat, das Natriumchlorid, Natriumcarbonat, Kaliumcarbonat und Natriumpolyphosphat aufweist,
b) reagieren Lassen der Mischung oberhalb atmosphärischem Druck,
c) Zubereiten einer Teigmischung, die Weizenmehl, Wasser, Kansui-Lösung und einen Teil der vorstehenden Reaktionsmischung umfasst,
d) Verarbeiten der Teigmischung durch Kneten, Ausrollen zu Blättern, in Streifen Schneiden und Beschwaden und
e) Trocknen der Teigmischung mit Luft.

2. Verfahren nach Anspruch 1, wobei das verwendete Öl ein verzehrgeeignetes Öl, wie Palmöl oder Palmolein ist.

3. Verfahren nach irgendeinem der Ansprüche 1 oder 2, wobei die Mischung bei einem Druck, der zwischen 2 und 6 bar beträgt, reagieren gelassen wird.

4. Verfahren nach irgendeinem der Ansprüche 1 bis 3, wobei die Mischung während 10 bis 90 Minuten reagieren gelassen wird.

5. Verfahren nach einem der Ansprüche 1 bis 4, wobei zwischen 0,5 und 5 % der Reaktionsmischung zu der Teigmischung hinzugefügt werden.

6. Verfahren nach einem der Ansprüche 1 bis 5, wobei die weiteren Zusätze zu der Teigmischung zugefügt werden, wobei die Zusätze Tapioka- und Kartoffelstärke, eine kleine Menge Öl und andere übliche aus der Gruppe stammende Zusätze sind, die aus Kaliumcarbonat, Natriumchlorid, Natriumpolyphosphat, Natriumcarbonat und verzehrgeeigneten Gummisorten besteht.

7. Verfahren nach Anspruch 6, wobei die Ölmenge zwischen 0 und 5 % beträgt.

8. Verfahren nach Anspruch 6, wobei die Menge von Tapioka- und Kartoffelstärke zwischen 0 und 20 % beträgt.

9. Verfahren nach einem der Ansprüche 1 bis 8, wobei das Trocknen in einem Heißluftofen oder durch Pralltrocknung durchgeführt wird.

10. Verfahren nach Anspruch 9, wobei das Trocknen bei einer Temperatur, die zwischen 70 und 100 °C beträgt, durchgeführt wird.

11. Verfahren nach Anspruch 9, wobei das Trocknen mit einer Luftgeschwindigkeit, die zwischen 2 und 60 m/s beträgt, durchgeführt wird.

12. Verfahren nach einem der Ansprüche 9 bis 11, wobei das Trocknen durch Pralltrocknung während 1 bis 5 Minuten durchgeführt wird.

13. Verfahren nach einem der Ansprüche 9 bis 11, wobei das Trocknen in einem Heißluftofen während 30 bis 60 Minuten durchgeführt wird.

14. Verfahren nach einem der Ansprüche 9 bis 13, wobei die fertiggestellten Nudeln einen Feuchtigkeitsgehalt unter 12 % haben.

15. Nicht frittierte schnell kochende Trockennudeln, die Öl in einer Menge enthalten, die zwischen 0 und 3 % beträgt, wobei das Öl in dem Teig vorliegt, der einen Feuchtigkeitsgehalt von unter 5 % aufweist und ferner Weizenmehl, Kartoffel- und Tapiokastärke und eine kleine Menge einer Geschmackszutat aufweist, die ein Reaktionsprodukt zwischen Öl, Weizenmehl und einem Konzentrat ist, das Natriumchlorid, Natriumcarbonat, Kaliumcarbonat und Natriumpolyphosphat aufweist.

## Revendications

1. Procédé de fabrication de nouilles sèches, à cuisson instantanée, non frites, comprenant les étapes consistant à :
a) préparer un mélange d'huile, de farine de blé, d'eau et d'un concentré contenant du chlorure de sodium, du carbonate de sodium, du carbonate de potassium et du polyphosphate de sodium,
b) faire réagir ce mélange au-dessus de la pression atmosphérique,
c) préparer une pâte comprenant farine de blé, eau, solution de kansui et une portion du mélange de réaction qui précède,
d) traiter cette pâte en le malaxant, en la roulant en feuilles, en le découpant en bandes et en le passant à la vapeur et
e) sécher la pâte avec de l'air.

2. Procédé selon la revendication 1, dans lequel l'huile utilisée est une huile comestible, comme l'huile de palme ou l'oléine de palme.

3. Procédé selon l'une des revendications 1 ou 2, dans lequel le mélange est mis à réagir à une pression comprise entre 2 et 6 bars.

4. Procédé selon l'une des revendications 1 à 3, dans lequel le mélange est mis à réagir pendant 10 à 90 minutes.

5. Procédé selon l'une des revendications 1 à 4, dans lequel entre 0,5 et 6% du mélange de réaction sont ajoutés à la pâte.

6. Procédé selon l'une des revendications 1 à 5, dans lequel les autres additifs sont ajoutés à la pâte, ces additifs étant fécule de tapioca et de pomme de terre, une faible quantité d'huile et d'autres additifs communs pris dans le groupe formé du carbonate de potassium, du chlorure de sodium, du polyphosphate de sodium, du carbonate de sodium et de gommes comestibles.

7. Procédé selon la revendication 6, dans lequel la quantité d'huile est comprise entre 0 et 5%.

8. Procédé selon la revendication 6, dans lequel la quantité de fécule de tapioca et de pomme de terre est comprise entre 0 et 20%.

9. Procédé selon l'une des revendications 1 à 8, dans lequel le séchage est réalisé dans un four à air chaud ou par séchage par impact.

10. Procédé selon la revendication 9, dans lequel le séchage est mis en oeuvre à une température comprise entre 70 et 200°C.

11. Procédé selon la revendication 9, dans lequel le séchage est mis en oeuvre avec une vitesse de l'air comprise entre 2 et 60 m/s.

12. Procédé selon l'une des revendications 9 à 11, dans lequel le séchage est mis en oeuvre par séchage par impact pendant 1 à 5 minutes.

13. Procédé selon l'une des revendications 9 à 11, dans lequel le séchage est mis en oeuvre dans un four à air chaud pendant 30 à 60 minutes.

14. Procédé selon l'une des revendications 9 à 13, dans lequel les nouilles finales ont une teneur en humidité inférieure à 12%.

15. Nouilles sèches, à cuisson instantanée, non frites, contenant de l'huile en quantité comprise entre 0 et 3%, cette huile se trouvant dans la pâte, présentant une teneur en humidité inférieure à 5% et comprenant en outre de la farine de blé, de la fécule de pomme de terre et de tapioca et une faible quantité d'un arôme, qui est le produit d'une réaction entre huile, farine de blé et un concentré comprenant chlorure de sodium, carbonate de sodium, carbonate de potassium et polyphosphate de sodium.
